# EUROPEAN PATENT SPECIFICATION

(11) **EP 3 571 820 B1**
(45) Date of publication and mention of the grant of the patent: **02.03.2022**
(21) Application number: 17811582.0
(22) Date of filing: 08.12.2017
(51) Int. Cl.: H04L 29/06, H04W 4/00, H04L 29/08, H04W 4/70, H04W 4/38

(54) **MANAGEMENT OF FEDERATED SYSTEMS**
VERWALTUNG VON FÖDERIERTEN SYSTEMEN
GESTION DE SYSTÈMES FÉDÉRÉS

(30) Priority: 18.01.2017 EP 17152054
(43) Date of publication of application: 27.11.2019
(73) Proprietor: British Telecommunications public limited company, London E1 8EE (GB)
(72) Inventor: MCKEE, Paul, London EC4V 5BT (GB); FISHER, Michael, London EC4V 5BT (GB)
(74) Representative: British Telecommunications public limited company Intellectual Property Department
(86) International application number: PCT/EP2017/082099
(87) International publication number: WO 2018/133992

(56) References cited:
- EP-A1- 2 469 479
- WO-A1-2015/092395
- KR-A- 20140 015 745

## Description

This disclosure relates to the management of complex federated systems or manageable collections of resources, comprising elements which interact by exchange of signals transmitted between the elements of a data communications network, such as the Internet, to control some of the elements in response to inputs at other elements - the concept sometimes referred to as "Smart Homes" "Smart Cities" or "Smart Businesses", or more generally as the "Internet of Things", making increasing use of sensors and actuators coupled with a controlling management system, giving some automation of routine actions.

Smart technology is generally adopted in response to specific problems offering individual solutions to localised problems, but as the benefits of such systems become apparent, and homes, towns and cities etc. start to adopt smart systems, these separate systems will start to share data and information to further improve the quality of decisions, evolving into a federation of local smart systems each with a local management system to achieve local goals. As an example a householder may have a household energy management application that is configured to meet the householder's particular requirements, but would also share information with higher level management functions such as the energy provider's control system. To facilitate and control the sharing of information, a communication gateway would be configured in each management domain to allow wider scale communication and decision making, by managing information flows and controlling the dissemination of information. The overall federation will be potentially hierarchical, although it is likely that some management domains may share information between themselves at a local level as well as communicating upwards. The membership of any such federation would be dynamic, as the number of smart systems, and the scale of each individual system, increases.

The dynamic nature of the federated system is a particular challenge. As sensors decrease in price and increase in ubiquity, the quantity of data increases dramatically. Over time the number of policies also increases, so managing the policy store and interactions is more complex, and it becomes increasingly difficult to manage changes to the system. As the system as a whole becomes more complex, both installation and decommissioning (either deliberate or as a result of technical failure) become more difficult to track, particularly for low cost devices which are not economic to recover or repair. As more devices are deployed, they also become more vulnerable to damage from natural or human causes. In particular, in an extended system with many low-cost sensors, with some redundancy, it will become more common to simply abandon a failed device, rather than repair or replace it. If the function is still required, another device may have been already installed which supersedes or duplicates the failed device, or if a replacement is necessary, the replacement device may have different functions, capabilities and communications procedures.

Part of the challenge of managing such a large-scale distributed, decentralised and dynamic system lies in controlling communications to avoid flooding the communications links, particularly for constrained low power network technologies. This lends further value to managing the system at the edge.

The intelligence or "smartness" in these federated systems is currently achieved by using numbers of sensors to measure the environment, or monitor for events that indicate departures from expected behaviour or conditions in the smart system. Each of these events will be associated with a message e.g. data or instruction that is sent to the smart management system. The message could simply be a sensor reading that indicates a deviation from expected behaviour, or sent in response to observation of an unexpected occurrence. In existing systems the management is achieved using rules or "policies" that can be very basically represented by the algorithm "if event X occurs take action Y". The observed event may be a measurement made by a sensor associated with the device, or operation of an actuator by some external agency (e.g. a manually operated switch) or it may be a message received from elsewhere. Likewise, the resulting action may be the operation of a transponder or actuator associated with the device, or the generation and transmission of a message to one or more further devices. This simple syntax can be extended to include condition checks so that "if event X is observed and condition C is true then take action Y". (Condition C may, for example, be a value of a measured property being in excess of a threshold when event X is observed, or a predetermined time not having elapsed since reporting of another event Z). This approach is known as the Event Condition Action model of policy-based management.

At small scale and with a single manager or point of control, as is described for example in patent specifications KR2014/0015745 and EP2469479, the authorship of such rules or policies can be carefully considered and the avoidance of conflicts can be assured, but in a federated system with no single point of control it is harder to avoid potential conflicts between the individual policies programmed in to the individual subsystems making up the federation. In this sense "conflict" means two different policies triggered by the same event that require opposite or incompatible actions in the managed system.

Such conflicts may occur as policies can be configured by different personnel at different times, with different objectives in view, and without a full understanding of the complete federated system. The development of a new policy may have unintended and unexpected effects on existing policies which use some of the same actuators or sensors, and such an effect may only become apparent if a particular set of circumstances arise. Such conflicts may end up in no action at all being taken, or a first-come first-served approach which can result in either of the two possible end states, or a potentially hazardous or disruptive condition if two conflicting processes are triggered. This unpredictability is undesirable, so conflict avoidance or resolution is a major concern. For most high reliability systems conflict is managed by using an offline static model of the managed system to test the policies before deployment, and to ensure predictable management. Building such models is time-consuming and expensive and they do not cope very well with highly dynamic systems that exhibit variation in both quantity and type of sensors and actuators, and the multiplicity of policy authors with differing levels of management authority. It also becomes increasingly difficult to model all possible scenarios as the complexity of the system increases, particularly when systems interact and there is no single entity responsible for change control.

As hardware is potentially unreliable, the system has to continually evolve to incorporate new sensors and actuators, and the ownership of individual resources can change over time. The system needs well-defined and reliable mechanisms in place to cope with both the removal and addition of both sensors and actuators, and related modifications to the range of policies present in the system.

Ownership is one way to establish the right to author policies for the management of resources in the smart system, and is one aspect that can be used to resolve potential conflicts. In order to avoid conflict every time a new policy is entered into the system it could be checked against all existing policies for conflicting results. The conflicting policies can then be identified, and conflict resolution strategies employed to remove the possible conflict. However, as the number of sensors and managed resources increases, and the number of potential policy authors also raises the potential for conflict increases and the difficulty of fully modelling the system and predicting conflicts increases in complexity and expense eventually becoming completely intractable.

For many management decisions in a smart system these inevitable policy collisions will be nothing more than inconvenient and observing the collision when it happens will give good indications of how to alter existing policies in order to resolve the inconvenience. There are however some combinations of policy actions when the system could end up in a state that in not just inconvenient but potentially dangerous, or even life threatening. This disclosure seeks to manage such high-risk situations by dynamic replacement of the policy set, with one which is substantially smaller and more focussed, and where it is feasible to prove that no harmful states occur.

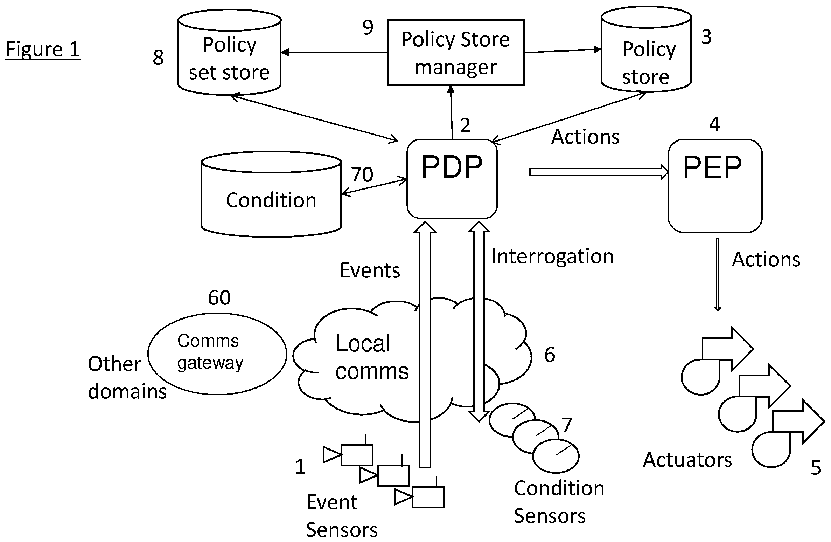

Figure 1 illustrates the IETF policy-based management architecture as applied to a simple setup. Events are detected by sensors 1 and are passed through a communications system such as a local area network 6 to a policy decision point (PDP) 2 for evaluation. The PDP has an associated policy store (Policy Information Point (PIP)) 3 that holds all relevant policies for the devices in its management domain. The event is matched with the trigger definition of these policies, and all matching policies are used to form a candidate set of actions that will reconfigure the live system. The actions to be performed will typically depend on current status conditions of other elements of the system, which may be recorded in a network condition store 7 as routine inputs or updates are received from the sensors 1, or by on-demand queries via the local communications system. Before the policy set is enacted it may be subjected to a range of conflict resolution strategies designed to eliminate as much conflict as possible. The policy execution set is then passed to one or more policy execution points (PEP) 4 for enactment by associated actuators 5.

Such an arrangement is a simple closed system. In a federated system the communications network 6 may be connected by a gateway 60 to other networks with their own sensors, PDPs and actuators. Sensors may send messages to more than one PDP and consequently an individual sensor may trigger actions by more than one PDP. An individual PDP may respond to trigger events detected by sensors not directly associated with it. In particular, reliance on trigger events from sensors in other networks can be difficult if the person responsible for maintaining the policy store (PIP) 3 does not have visibility of changes in the sensor network, such as addition or removal of sensors, or changes in their specification, or changes in their environment.

The basic structure and definitions of policy-based management systems are well known and documented. In current practice there is a single policy store used by a PDP and this is simply managed by adding new policies and removing old ones. If the removal process isn't well managed the policy store may just increase in size causing a performance overhead every time it is searched for event matches. The presence of redundant policies also makes the task of policy set modelling and analysis more difficult.

United Kingdom Patent Specification GB2479817A describes an energy management system with the ability to turn power on and off driven by policies or by local over-ride switches. The system turns off power if a fire alarm is triggered. However, in some circumstances power may need to be maintained, for example for lighting to assist in evacuation, to ensure security doors do not lock, or to operate systems such as sprinklers.

International Patent Specification WO2015042899 describes a communications system in which a generic emergency signal triggers a number of similar network elements to enter an emergency mode. Corrective action is then calculated in real time and sent to affected communication nodes. This requires the management system to have detailed information about the capabilities of each element, and is only scalable to large networks if there is a high degree of homogeneity between the elements.

An aspect of the present disclosure provides for controlling a federated system of interacting sensors and operational equipment configurable to control the operational equipment in response to trigger events detected by the sensors, according to a set of configurable management control policy sets, and programmed to operate, in response to one or more identified special events, to replace the set of management control policies with a predetermined policy prioritising control of the behaviour of the system according to a predetermined set of control parameters.

Another aspect of the present disclosure provides a method of controlling a federated system of interacting sensors and operational equipment configurable to control the operational equipment in response to trigger events detected by the sensors, according to a set of configurable management control policy sets, wherein, in response to one or more identified special trigger events, the set of management control policies is replaced with a predetermined policy prioritising control of the behaviour of the system according to a predetermined set of control parameters. The invention is disclosed in the appended claims.

External communication may be restricted to and from the system during replacement of the management control policies. The prioritised behaviour is programmed by a user input having an access control system. One or more of the trigger events may be manual interventions to part of the system, the automatic operation including shutdown of sensors and/or actuators whose behaviour would be anomalous during the period of such intervention. One or more of the trigger events may be responsive to a malfunction in one or more sensors or actuators, the automatic operation including shutdown of sensors and/or actuators whose behaviour would be anomalous as a result of such malfunction.

Functions configured to be triggered by a sensor may be operated in a default setting if the sensor is shut down. Functions configured to operate in a mode dependent on a property of a component of the system may have a default setting for use if the component is shut down.

In normal operation one or more actuators may be controlled by a triggering function, and the operation of the actuator or actuators may be modified if one or more of the actuators are shut down.

A further aspect of the disclosure provides a computer system including a processor and memory storing computer program code for performing the steps of the method. Another aspect of the disclosure provides a computer program element comprising computer program code to, when loaded into a computer system and executed thereon, cause the computer to perform the steps of a method.

Aspects of the present disclosure provide for a small number of master events whose action is to replace a set of freely-configured policies normally used by the Policy Decision Point to one more suited to the context indicated by the master event. Such master events would capture potentially serious conditions such as detection of fire, flood or medical emergencies. These alternative policy sets would be restricted in scope and simpler than the general policy set, so that the system will respond in a more predictable and controlled fashion. In larger deployments such as smart factories or smart cities it may be feasible to model such small sets exhaustively to ensure predictable behaviour, but for use in more limited situations such as in domestic use it is envisaged that a simple general-purpose policy set would be developed and tested on a generic test installation before being supplied to multiple end-users.

Aspect of this disclosure simplify the management of evolving and complex systems. Larger systems are likely to be so different in terms of scale and composition that the end users' expertise may be required at some point in the management configuration. The choice of the master event is one of these situations. For small scale deployments such as smart homes the choice of master event might be obvious but for business deployments possibly less so. The suppliers of sensors and actuators that join together to build smart systems might give guidance in their documentation or set-up procedures that certain events might be regarded as master events. This would be particularly true in the case of wearables, for example worn by someone with a medical history that raised concern. An example of a master event would be failure of the wearable to report a pulse, which would trigger an emergency response switching the system to a restricted policy set.

These restricted policy sets can be validated by a single responsible person before loading into the system and limited in action, maybe in the first instance just initialising every managed item to "safe" (where "safe" would be a setting defined by the manufacturer). Master events to be associated with an alternative policy set would be typically those associated with emergencies, such as personal health, fire, or flood.

The creation of identified special events that have the capability to trigger a change in the policy set can be used to control the behaviour of the larger system. The special events have priority processing, and the policies associated with them target the PDP and specify the policy set to be loaded and used. This allows the system to switch to smaller more focused policy sets that make management of high priority incidents more effective.

The PDP is itself policy managed, and is registered with a PDP Manager 9 that on receipt of a policy action that targets the PDP loads a new policy set that is used for all subsequent event processing until the system is reset.

As a further refinement of this policy set modification, the policy set can be automatically "pruned" when maintenance or replacement activities are undertaken. This pruning would remove any policies associated with the resource undergoing repair or replacement, and prevent any test or spurious events generated during maintenance or replacement from altering the behaviour of the larger system. This is significantly more complex than policy set replacement but removes the need for the system owner to create large numbers of policy files in advance.

The disclosure allows simplification of the management process, leading to a more accurate and predictable response to certain potentially critical situations. The reduction in size and complexity of the policy set would also make exhaustive modelling of its behaviour tractable, something of particular importance in safety critical environments. In addition this simplification in the face of potential emergency or other transitory situation is not permanent, as the full original policy set can be restored using a single management event.

Another advantage lies in the maintenance and evolution of a large-scale system, where the overall system needs to be protected from instabilities caused by components undergoing repair or replacement. It is highly unlikely that large scale systems can be shut down every time a sensor or actuator fails but erroneous data or actions caused by these faulty components could impact the "intelligence" of the system, and potentially even the continued operation of the large-scale system. If the policy sets used for the system management can be managed dynamically at runtime, the overall system should be able to stay in operation. It may be less efficient than when fully operational, but will at least remain in operation, or at the very least exhibit graceful predictable degradation.

A policy associated with a master event would have a number of associated actions defined in its structure. In general, these can be categorised into three basic sets of actions associated with a single master event. As a pre-condition all ongoing policy-based management tasks are terminated, and all control is vested with the PDP manager 9.

All resources in the management domain are set to a safe state. During normal operation of the smart system its policies will be responding to inputs and setting actuators to achieve the goals described by those policies, but when a master event is registered this normal operation may no longer be appropriate or desirable. The master event triggers a set of actions that set all of the automatically controlled systems to safe values. For example, in event of a fire being detected, all automated ventilation may need to be stopped to avoid supplying oxygen to the fire, and all automatic doors should be unlocked to allow escape. The system loads a minimal policy set associated with the master event to only allow automated actions that don't make the situation worse. In the case of a fire a rise in temperature in some rooms might normally trigger increased ventilation. The minimal policy set would over-ride such triggering.

The master event needs to control external communications access by reconfiguring any gateway to avoid external events requesting resource actions. The communications configuration may also include sending failure messages in response to any external communications attempts.

Permissions to restore the system to normal operation can be restricted to operation by a master controller who has the responsibility to ensure the condition that triggered the master event has been resolved. The minimal policy set may include policies for the transmission of alerts or of data from certain relevant sensors to a communication end point associated with the master controller.

Taking an example of a "smart home", with several inhabitants with different patterns of usage and attendance, the home would be fitted with electronic security measures. These measures will be policy controlled, and use a combination of identity and other signals to control entry, each policy and associated conditions being authored by the respective household members. There may also be personal data stores associated with the household and with each member, used for storing a range of personal data with associated access control policies, all contained in the policy store for the household. As the degree of automation in the smart home increases, other sensors and actuators can be added, increasing the complexity of the interactions and the scale of the policy store. For example, one of the new sensors may relate to personal health monitoring and record vital signs for one of the inhabitants, so in a scenario where this inhabitant does not follow their normal work schedule and instead stays in the house, the monitor could detect a potential medical problem and trigger a policy that called for external medical assistance. This could be achieved by an automated phone call, SMS or other relevant technology. In a normal policy-based system with some degree of complexity, the alert event causes the PDP to check the status of the door locks and reconfigure them to allow access to an, as yet unknown, medical responder. This may conflict with other users' access policies. It may also be required to allow the responder access to the monitored person's recent medical history, as stored in their personal data store, which may require potentially conflicting policies to be over-ridden.

In an example, a medical alert message is designated as a master event which, when observed by the PDP, is immediately processed - the first action of the policy triggered by the special event is to load a different policy set into the PDP. This policy set will be simple, for example controlling door opening and display of medical data on a nearby screen for the first responder. This simpler policy set will replace the existing set. When the emergency situation is resolved the senior householder, or the individual concerned, can issue a reset event which tells the PDP to revert to using its original policy set.

In a domestic setting the switching of policy sets may appear excessively complicated, but this is a simplified example. On the scale of factories or cities the number of policy authors and controlled systems is very much greater, and identification of potential policy conflicts becomes very difficult. For a manufacturing plant making a range of products on different production systems, each with local managers and different requirements for shutting down or achieving safety, the replacement of individual policy sets with simplified alternative policies to be implemented in specified emergency situations such as fire or building evacuation leads to a significant simplification of the management problem of dealing with the emergency situation. Each alternative policy sets may also control communications with other parts of the manufacturing plant. This isolation will prevent any spread of errors in the overall system.

Other situations in which an alternative simplified policy set may be appropriate are the repair and maintenance activities that will inevitably take place in any complex system. For complex interrelated systems removing one element for repair may adversely affect the stability of the overall system, and sensors associated with the resource under repair may generate events that are part of test sequences and are not representative of its real-world operation. Similarly the element undergoing repair could receive actions from external policies, making its behaviour unpredictable, and potentially making the quality of any maintenance hard to evaluate, and presenting a potential hazard, and possibly endangering personnel working on the equipment. There is therefore a need to be able to effectively isolate components from the smart system during repair and maintenance activities.

Moreover, if the repair process requires replacement of a resource, the replacement may be an updated model which generates slightly different messages, or offers a different control interface to the rest of the system. This has to be accommodated by dynamic management of the policy sets. The modification of policy sets for maintenance purposes may in fact be automated so that the burden of creating the restricted policy sets is removed from the operator.

As the "Smart" systems scale, and the numbers of resources increases it is impractical to expect the human managers to construct special policy sets for every sensor and actuator in the system to address cases of maintenance or replacement. As a refinement of the replacement policy set proposal, examples allow a dynamic policy set modification when sensors and actuators undergo repair or replacement. The maintenance master event would target the policy store management function and include a description of the activity being undertaken and the resources involved. The policy set manager would then initially save the policy set as a backup and make a modified policy set for use during the duration of the repair activity. The communications system is also configured to isolate the resource under repair or replacement.

Depending on exact details of the overall system there may in addition be a policy management function that communicates with all relevant PDP's and either changes their policy sets, or alerts the authors of policies that require modification to take account of the system changes.

An example will be described with reference to the drawings, in which

### LIST OF FIGURES

Figure 1 depicts an IETF policy-based management architecture as applied to a simple "smart home" setup, as has already been discussed
Figure 2 is a block diagram of an example computer system.
Figure 3 is a diagrammatic representation of an example process.
Figure 4 is a diagrammatic representation of a set of policies associated with a given resource.
Figure 5 is a diagrammatic representation of part of the process of Figure 3 in more detail.

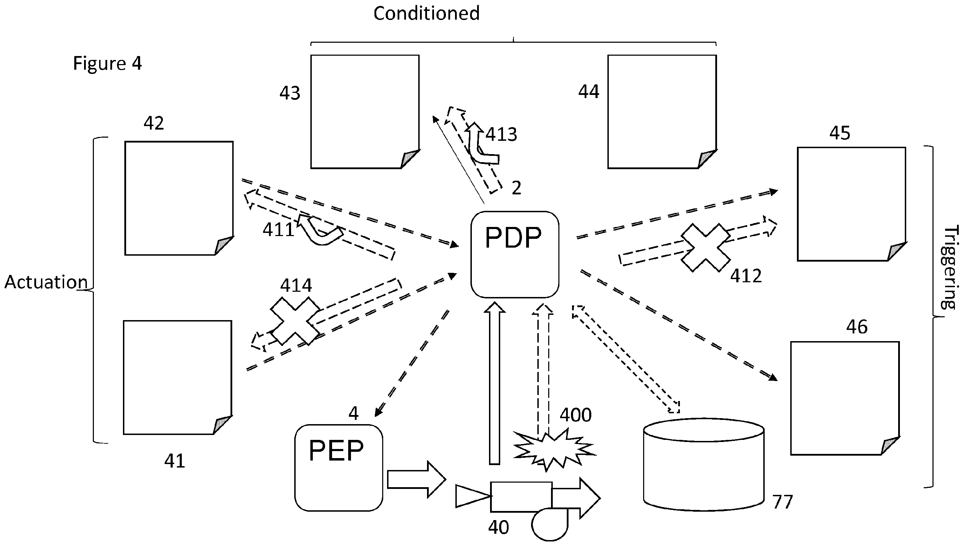

Figures 1 and 4 illustrate the functional elements which co-operate to perform aspects of the disclosure, and in particular the operation of the policy decision point 2. These functional elements may be implemented in software on a general-purpose computer or a distributed system. Functions implemented on the user device may be installed in firmware or by downloading applications to the user device from a remote application store.

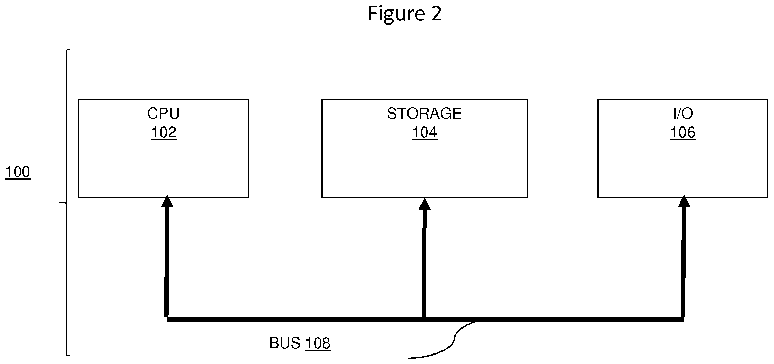

Referring first to Figure 2, a computer system 100 comprises a central processor unit (CPU) 102 is communicatively connected to a data store 104 and an input/output (I/O) interface 106 via a data bus 108. The data store 104 can be any read/write storage device or combination of devices such as a random-access memory (RAM) or a non-volatile storage device, and can be used for storing executable and/or non-executable data. Examples of non-volatile storage devices include disk or tape storage devices. In this example a number of different of data are stored. Further data may be retrievable from remote storage facilities. The I/O interface 106 is an interface to devices for the input or output of data, or for both input and output of data. Examples of I/O devices connectable to I/O interface 106 include a keyboard, a mouse, a display (such as a monitor) and a network connection. Such a computer system can be used to operate examples, as will now be described.

This example aligns with the established IETF policy architecture, as depicted in Figure 1. The programmes are created and stored in a policy store 3 for subsequent download. This programming data is used by the policy decision point 2 to manage actions to be taken by the policy execution point PEP 4. Managed entities such as sensors 1 can emit events or messages indicating environmental conditions or excursions, which are communicated to the policy decision point 2 to trigger processes to be performed by the policy execution point 4 to control actuators 5.

In an example, an additional store 8 is maintained for the policy sets. This specialised policy set store 8 may be physically separate from the conventional policy store 3, or they may both be maintained in the same storage 104 (figure 2). It is advantageous that access rights to the specialised policy sets be restricted to a limited number of users, for instance a system administrator.

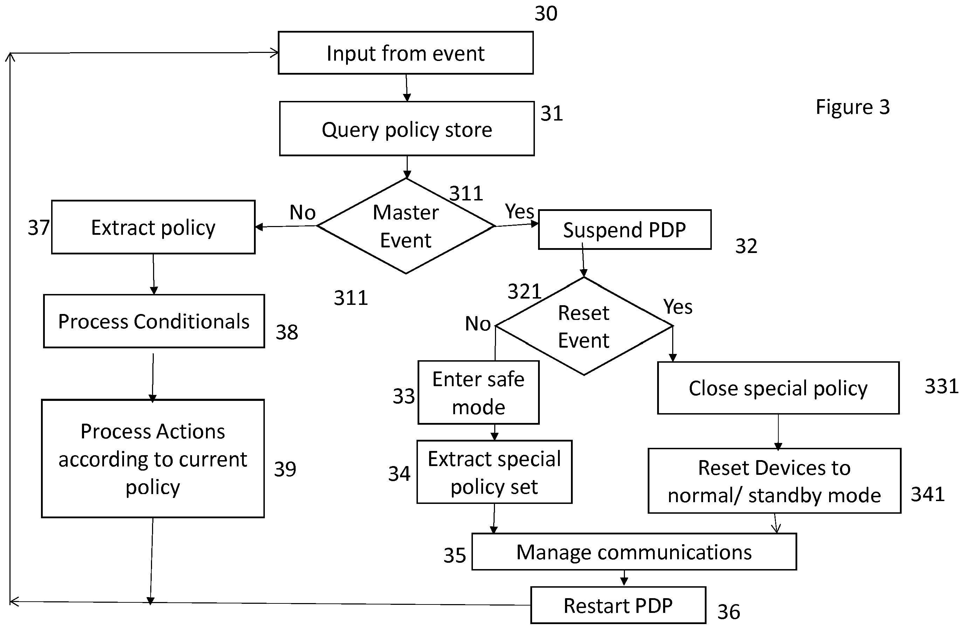

Conventionally, a policy decision point 2 would operate according to steps 30, 31, 37, 38, 39 of Figure 3 (without the decision point 311). An input from a sensor 1 (step 30) may be automatic, in response to a sensor detecting a property in its environment (e.g. temperature, motion), or it may be a manual input entered by human agency. The input 30 first triggers the PDP 2 to query the policy store (step 31) to identify any candidate policies which may require implementation in response to the occurrence of the reported event, and extract the relevant policy or policies (step 37). Each policy then proceeds to assess any conditions in the network that may affect the operation of that policy (step 38). If the candidate set is essentially normal the candidate set is pruned by evaluating any conditional elements referenced in the individual policies, by sending messages to the resources identified in the conditional clauses. The returned values are used to evaluate the clauses and prune the candidate set

Conditional settings are conditions of the system which determine how, or whether, a policy is to respond to a given a trigger event. For example, factors such as ambient temperature, or the position of an actuator or manually operated switch, or time of day, or whether a specified event has occurred within a predetermined previous time span, may modify the outcome of a given trigger event. Assessment of such conditions may require reference to stored data 70 or by interrogation of sensors 7, actuators 5, and other network elements, and thus determines what actions to be taken, and sends control signals to the relevant actuators 5 to put those actions into effect (step 39). The actuators may operate machinery such as ventilation systems, lights, etc. Other actuators may generate signals such as alarms to alert human users to a condition to which they need to respond. It should be noted that the terms "actuator" and "actuate" are used in this specification in relation any change of operating state of a machine or other device, such as starting, stopping, changing its rate of operation, or generating an output such as a warning light.

Any active policies remaining after condition checking (step 38) have their actions executed by sending the relevant messages to the target PEPs (step 39)

The PDP moves on to process the next event (step 30).

A special type of event is a "change policy set" event which modifies the policies in the PDP. Such events require input 30 associated with appropriate security checking to allow the policy sets to be changed.

A given input 30 may invoke more than one policy, but the assessment 38 of the conditional factors should in general determine whether each individual policy is to be invoked. A given input may cause one policy to operate a first set of actuators, and another policy to operate a second set of actuators. In a small system the policies can be designed to avoid conflicts between the actions required of different policies triggered by the same action under the same conditions, but in a larger system, it becomes increasingly difficult to ensure that conflicts do not occur between different policies, as they may have been designed and programmed, and updated, by many different designers without a full understanding of how the other policies operate.

The example to be described aims to avoid or reduce such conflicts, by arranging for certain events to have a policy created for them that targets the policy-based management system itself. Referring again to Figure 3, the PDP, on receiving an input 30 from a sensor 1, next checks in the master policy store 8 to determine whether the input 30 constitutes a trigger event for a master policy (step 311).

If one of the candidate policy set is identified as a master event policy the PDP suspends all existing policy processing (step 32) and enters a master event work flow process controlled by the PDP manager 2 (steps 33, 34, 35), in which all systems are set to a predetermined safe setting (step 33) and a new policy set is loaded (step 34). The PDP is configured so that this policy set can only be changed by a predetermined special re-set input, to be discussed later). External communication is restricted (step 35) to avoid any unwanted effects

The PDP is then restarted (step 36), which will then react to observed events according to the reduced rule set in the emergency policy set.

A reset master event operates in a similar manner. Such an input, which would typically include appropriate security identification, is detected at steps 311 and 321 and causes a different policy set to be loaded in place of the special policy (step 331) including setting devices to a normal or standby mode in preparation for normal operation (step 341) re-establishing communication (step 35) and then restarting the PDP (step 36), to resume normal operation. This may be done automatically by retrieving settings stored when the special mode was initiated. Such a restoration process may be appropriate after a "Holiday" setting, where it is to be assumed that the premises or other system is in a similar condition to that pertaining before the master policy set was initiated. However it may not always be appropriate to restore the previous conditions, as some verification of conditions may need to be completed before the full policy set is restored, so a "standby" mode may be appropriate, to allow various system checks to be made before normal operation can be resumed. Resetting after a master event policy set change may therefore set the system (step 341) to a policy set that differs from the one in place before the master event occurred which initiated the special policy set. This may be necessary, for example, to accommodate graceful start-up of more complex systems or accommodate the loss of managed elements associated with the master event.

When a special policy is initiated, the PDP 2 may record the identities of any settings or policies that have been suspended, in order to simplify subsequent restoration of normal operation.

Typically, individual users can define the normal policies in the policy store 3, but creation and maintenance of the master policies would be the preserve of a system administrator.

Examples of alternative policy sets could include one for use in a "Holiday" setting - a building is essentially left in a minimal state of operation, just secure and dry with no user-based optimisations. Another, "Emergency", set could set all systems to known safe conditions, and enable access for emergency-based services. The Holiday set would typically be initiated by manual action of the user, whereas the Emergency set could be initiated automatically (e.g. in response to a smoke detector) or manually (in response to a "panic button").

Different policies would be appropriate for different types of emergency, for example a water supply may need to be maintained in the event of a fire but shut off in the event of a flood. Detection of flammable gas may require all electrical switches to be maintained in their current state (to avoid the possibility of sparks).

Although it is desirable that the policies be robust and therefore as simple as possible, they may require some degree of interdependency. For example a "fire" policy may operate in a different way if the "Holiday" policy is in operation, as containment of a fire can be managed more easily if provision does not also be made for evacuation. Likewise, if a "fire" alert has been given, a water supply may be maintained notwithstanding a subsequent "flood" alert as the sensor may be detecting the consequences of automated or manual action taken to extinguish the fire.

Any number of alternative policy sets may be created. Each alternative set would be smaller than the total policy set for any managed system, and the reduced size of the alternative policy set would simplify manual checking for conflicts etc. For example, in the two examples given above the "Emergency" set could be set to generally over-ride the "Holiday" set, or it could be modified to take account of a modified emergency procedure for a vacant building, as without the need to evacuate the building, containment of a fire or flood can be prioritised. This could be stored as an additional alternative policy set

The implementation of smaller policy sets allow automatic modelling and checking, increasing the confidence in their operation.

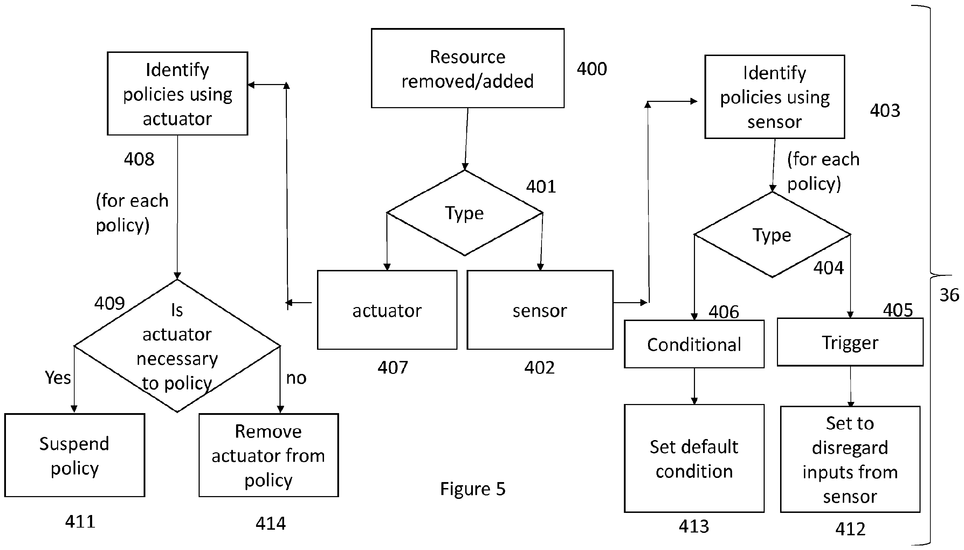

A variant of the process is depicted in Figure 4 and Figure 5. These Figures relate to a special policy set to be used (step 34, Figure 3) in the event of a maintenance or other intervention to one or more of the physical components 1, 5, 7 of the system, which may cause anomalous operation of those elements. Such interventions may include testing of sensors by artificially simulating the conditions which trigger a policy, or testing of actuators to ensure their correct operation. Moreover, automatic operation of an actuator whilst it is receiving attention from a technician may be hazardous. There are also situations where a number of actuators are intended to operate in a co-ordinated manner, for example as several steps in a process, and all the actuators need to be shut down if one of them is under maintenance or repair.

In Figure 4, a resource 40 is depicted associated with a number of policies 41-46. The resource 40 is depicted as both an actuator, operated in response to some policies 41, 42, and also as a sensor whose output triggers other policies 45, 46. Other policies 43, 44 have a provisional response to inputs from the resource 2. In practice it is unlikely that a single resource 40 would operate both as a sensor and an actuator, although the current setting of an actuator may be one of the conditions which controls the operation of a policy 43, 44.

When a system is under maintenance or other human interventions, the management system may receive spurious inputs. This may be because a sensor has been disconnected, or is being tested, or because of unusual activity close to the sensor. Similarly, if a technician is overhauling or testing an actuator, it may be necessary to prevent the actuator from being operated by the policies, as such operation may represent a hazard to the technician or cause damage to other components. It is desirable that any policy which is triggered by, or which controls, that element can be modified to allow such unusual activities to take place safely. To enable this, certain trigger events 400 may be identified by the PDP policy manager 9 as a special kind of master event, involving a special policy set 34. Such an input 400 may be manual, initiated by a technician entering a "maintenance" code at the PDP and identifying the element concerned. The maintenance inputs may also be generated automatically, for example in response to detection of a malfunction. For example a sensor or actuator may require testing or taking offline. Alternatively, the sensor or actuator may itself detect a fault condition that causes it to transmit a fault alert. The fault alert may be a negative alert - that is to say, that the PDP may be triggered by a failure to receive a "heartbeat" signal from the element involved.

For such activities, changes to policies are likely to be more dynamic in nature than normal changes, and alternative policy sets may not have been prepared in advance. In a "smart" system every component has its own system identity, a set of messages that it supplies to the system, and a set of actions that it will take in response to messages from the policy-based management system. Using the ECA policy model, there is a local policy store 77 associated with each PDP 2, that stores all of the active policies for the local system. These policies are stored in a data base in a common format such as JSON.

When a component has to undergo maintenance an input 400 is delivered to the PDP 2, which is identified as a master event requiring a special policy set (steps 33, 34, 35). The message or event used to transmit this information is labelled with a maintenance identifier in line with the master event strategy. When such a maintenance event is received the policy store manager 9 operates according to the process depicted in Figure 5. It first searches its store of policies based on three criteria (steps 401-409), and returns three sets of results, namely:
- Search for all policies 45 for which the trigger event originates from the resource being repaired
- Search for all policies 41 for which the action targets the resource being repaired
- Search for all policies 43 for which the conditional check uses the resource being repaired.

Not all of these sets are populated in every case. Typically, the resource will either be a sensor (steps 402-404), either triggering the policy (405) or conditioning the policy (step 406), or it will be an actuator, controlled by the policy (steps 407-409).

The first set of results is relatively straightforward to process in that any policies in this set can be removed from the policy store 7 (step 412), so that any input from the sensor in question is disregarded. Thus any spurious inputs received from the resource whilst it is undergoing repair or test are disregarded. As shown in Figure 4, an instruction 412 is transmitted from the PDP 2 to the policy store suspending operation of policies 45 that are normally triggered by the sensor 40 that has been disabled. This ensures that no anomalous responses are generated as a result of inputs from the sensor or its communications connection.

If a policy is triggerable independently from any one of a number of inputs, the policy is only suspended insofar as the sensor under repair is concerned.

In the second case (steps 407-409) is case, a policy 41 is removed only insofar as it relates to the actuator 40 in question (step 414), so that the resource receives no inputs which could trigger its operation, thereby interfering with any tests being performed on it, and potentially presenting a hazard to the technician performing the repair or test. As other actuators may also be triggered by the same input, it is necessary to determine whether the trigger should continue to cause them to operate (step 409). This will depend on how the actuators co-operate. Thus other actuators may also need to be disabled if they are intended to co-operate with the one under repair, but would not need to be disabled if the system can operate without the one under repair. Each actuator can therefore be defined in relation to a policy as "necessary", "capable" or "not relevant" to action under a given policy. An instruction 411, 414 is therefore transmitted from the PDP 2 to the policy store 7 to amend any policies 41, 42 which control the actuator. A policy is suspended (step 414) if any actuator, or combination of actuators, defined as "necessary" to that policy is currently suspended, but may be continued (step 411) if at least one "capable" actuator (or some other predetermined minimum number) is available, by disregarding inputs from the disabled actuator.

In order to isolate the local repair from the wider system, the same policy store management function can be used to send configuration messages to the communications gateway 60 (Figure 1) in order to block messages to and from the resource undergoing repair and avoiding any wider system effects of the repair process.

The situation with conditional checks (steps 406, 413) is a little more complex, as in such a case an event may be observed from a valid source (other than the resource under maintenance) and the system may be required to take an action, but without the conditional check the system cannot determine the correct action. Removal of all of the policies for which the resource under repair is in a condition evaluation statement may be possible, but this might impact the behaviour of the larger system adversely. In general, any policies which require the condition of a resource 40 to be detected are modified (step 413) to a default condition for that resource if the resource is taken out of service (step 400).

Once the policies 41-46 have been modified to take account of the removal of the component 40, the PDP is restarted (step 36) and the system operates as normal with the modified policies.

In order to detect if a condition sensor is unavailable, a timer may be specified in the policy that will only wait for a specific time interval to get a condition report from the resource, and then take alternative action. At its most basic the alternative action might be to contact a human operator able to make a decision, or each policy with a condition monitoring statement may be required to specify an action to be taken if the condition cannot be evaluated. Such a policy may be to use a default setting for that resource, which may be one of the normal settings for that resource, or it may be a special value to be used only if no report is received from the resource.

The removal or modification of a policy may be only temporary in nature, and further instructions reinstating the policies can be transmitted when the repair is complete. If the component 40 is reinstated, the policies can be restored to their original forms (step 341). If a different component is installed the process of Figure 4 can be repeated, reversing or modifying the outcomes 411 - 414 as appropriate.

Should the repair involve removal and replacement of the resource, the policies stored in the store 3 may be modified automatically to exchange the details of the faulty resource with those of the replacement. With a like-for-like replacement using the same network identity, these details may be the same as for the original unit, or may extend only to the identity of the unit. In other cases, where the resource has been replaced with a differently-configured unit, the policies may need to be changed to take account of the new mode of operation at the relevant address. For example, a sensor may be replaced by a sensor for a different property, or for the same property but calibrated differently - for example giving a temperature in degrees Celsius, where the previous sensor reported a binary condition (too hot/not too hot), or delivering humidity figures whereas the old resource delivered dew-point figures. (Dew point can be derived from humidity, and vice versa, if the ambient "dry" temperature is known). The rewritten policies can be reinstated into the active policy store for evaluation as normal.

The larger scale "smart" system may be considered as a federation of many more localised policy management domains. Other domains may use sensor outputs from local resources and in some situations even attempt to cause actions. It is therefore necessary to apply the same policy store management techniques to remote policy stores. This may be achieved by connecting policy stores in a peer to peer fashion and sending the policy store management messages out to the local neighbours, and letting the changes diffuse out. This is probably most important in the case of resource removal or replacement. Quick repair cycles could be managed by local policy store manipulations and communication blocking, particularly if the policies all have conditional statements bounded by timers with default action specified.

Remote policy store manipulations may be particularly security sensitive and the incoming management event should be clearly identified as originating with an owner of the device being worked on. Actions should then be restricted to those policies relevant to that device. This distributed and fine-grained security could be achieved using a bearer token as proof of ownership. JSON web tokens would have the potential to provide this level of security and also include local claim checking as an enhancement

A number of strategies are possible for establishing and maintaining the communications hierarchy between the policy stores. Each policy store maintains a list of its neighbours and sends messages to each of them in a peer to peer fashion.

If more privacy and personal data are required, the system can be arranged such that each management domain only makes public those events the user is content to share, and then share only with acceptable recipients. To achieve this each management domain publishes a catalogue of information that may be exported, and resources that it allows access to. External parties use the catalogue to discover data, and to request access, so that it may obtain an access token for the data. This act of requesting access to data can be stored and used to build a directory of subscribers to a resource. The directory includes a contact address for each subscriber. When a repair or replacement activity is undertaken the directory can be checked and if any subscriber is currently using data from the resource undergoing repair or replacement it is notified of its potential unreliability, and notified in the same way when the resource achieves normal operating status again.

## Claims

1. Apparatus (9) for controlling a federated system of interacting sensors (1,6) and operational equipment (7), the sensors and operational equipment being under the control of a federation of control systems, each control system being configurable to control the operational equipment in response to trigger events detected by the sensors, according to a respective set of configurable management control policies, the apparatus being programmed to operate, in response to one or more identified special events among said trigger events, to replace the respective set of configurable management control policies in each control system of the federation with the same predetermined policy prioritising control of the behaviour of the federated system according to a predetermined set of control parameters.

2. Apparatus according to claim 1, configured to restrict external communication to and from the system during replacement of the sets of management control policies.

3. Apparatus according to claim 1 or claim 2, configured to enable that the prioritised behaviour is programmed by a user input having an access control system.

4. Apparatus according to claim 1, claim 2 or claim 3, having provision for manual intervention to part of the federated system, the control parameters including shutdown of sensors and/or operational equipment whose behaviour would be anomalous during a period of such manual intervention.

5. Apparatus according to claim 1, claim 2 or claim 3, having detection means responsive to a malfunction in one or more sensors or actuators, to trigger automatic shutdown of further sensors and/or actuators whose behaviour would be anomalous as a result of such malfunction.

6. A method of controlling a federated system of interacting sensors and operational equipment, the sensors and operational equipment being under the control of a federation of control systems, each control system being configurable to control the operational equipment in response to trigger events detected by the sensors, according to a respective set of configurable management control policies, wherein, in response to one or more identified special events among said trigger events, the respective set of configurable management control policies in each control system of the federation is replaced with the same predetermined policy prioritising control of the behaviour of the federated system according to a predetermined set of control parameters.

7. A method according to claim 6, wherein external communication to and from the system is restricted during replacement of the sets of management control policies.

8. A method according to claim 6 or claim 7, in which the prioritised behaviour is programmed by a user input having an access control system.

9. A method according to claim 6, claim 7 or claim 8, in which one or more of the special events is a manual intervention to part of the system, the control parameters including shutdown of sensors and/or operational equipment whose behaviour would be anomalous during the period of such manual intervention.

10. A method according to claim 6, claim 7, or claim 8, in which one or more of the special events is responsive to a malfunction in one or more sensors or operational equipment, the control parameters including shutdown of sensors and/or operational equipment whose behaviour would be anomalous as a result of such malfunction.

11. A method according to claim 9 or claim 10, in which functions configured to be triggered by a sensor are operated in a default setting if the sensor is shut down.

12. A method according to claim 9, claim 10 or claim 11, in which functions configured to operate in a mode dependent on a property of a sensor or operational equipment of the system have a default setting for use if the sensor or operational equipment is shut down.

13. A method according to claim 9, claim 10, claim 11 or claim 12, wherein in normal operation one or more operational equipment are controlled by a triggering function, and in which the operation of the operational equipment is modified if one or more of the operational equipment are shut down.

14. A computer system including a processor and memory storing computer program code for performing the steps of a method as claimed in any of claims 6 to 13.

15. A computer program element comprising computer program code to, when loaded into a computer system and executed thereon, cause the computer 2. system to perform the steps of a method as claimed in any of claims 6 to 13.

## Patentansprüche

1. Vorrichtung (9) zum Steuern eines föderierten Systems von interagierenden Sensoren (1,6) und Betriebsausrüstungen (7), wobei die Sensoren und die Betriebsausrüstungen der Steuerung einer Föderation von Steuersystemen unterliegen, wobei jedes Steuersystem auslegbar ist, die Betriebsausrüstungen in Reaktion auf Auslöseereignisse, die von den Sensoren detektiert werden, gemäß einem jeweiligen Satz von auslegbaren Verwaltungssteuerrichtlinien zu steuern, wobei die Vorrichtung programmiert ist, in Reaktion auf ein oder mehrere identifizierte spezielle Ereignisse unter den Auslöseereignissen betrieben zu werden, um den jeweiligen Satz von auslegbaren Verwaltungssteuerrichtlinien in jedem Steuersystem der Föderation durch dieselbe vorbestimmte Richtlinie, die eine Steuerung des Verhaltens des föderierten Systems gemäß einem vorbestimmten Satz von Steuerparametern priorisiert, zu ersetzen.

2. Vorrichtung nach Anspruch 1, die dazu ausgelegt ist, eine externe Kommunikation zum und vom System während des Ersatzes der Sätze von Verwaltungssteuerrichtlinien einzuschränken.

3. Vorrichtung nach Anspruch 1 oder Anspruch 2, die dazu ausgelegt ist, es zu ermöglichen, dass das priorisierte Verhalten durch eine Benutzereingabe, die ein Zugangssteuersystem aufweist, programmiert wird.

4. Vorrichtung nach Anspruch 1, Anspruch 2 oder Anspruch 3, die das Vorsehen eines manuellen Eingriffs in einen Teil des föderierten Systems aufweist, wobei die Steuerparameter eine Abschaltung von Sensoren und/oder Betriebsausrüstungen, deren Verhalten während einer Periode des manuellen Eingriffs unnormal wäre, beinhalten.

5. Vorrichtung nach Anspruch 1, Anspruch 2 oder Anspruch 3, die Detektionsmittel zum Auslösen einer automatischen Abschaltung von weiteren Sensoren und/oder Aktuatoren, deren Verhalten infolge einer Fehlfunktion unnormal wäre, als Folge der Fehlfunktion bei einem oder mehreren Sensoren oder Aktuatoren aufweist.

6. Verfahren zum Steuern eines föderierten Systems von interagierenden Sensoren und Betriebsausrüstungen, wobei die Sensoren und die Betriebsausrüstungen der Steuerung einer Föderation von Steuersystemen unterliegen, wobei jedes Steuersystem auslegbar ist, die Betriebsausrüstungen in Reaktion auf Auslöseereignisse, die von den Sensoren detektiert werden, gemäß einem jeweiligen Satz von auslegbaren Verwaltungssteuerrichtlinien zu steuern,
wobei in Reaktion auf ein oder mehrere identifizierte spezielle Ereignisse unter den Auslöseereignissen der jeweilige Satz von auslegbaren Verwaltungssteuerrichtlinien in jedem Steuersystem der Föderation durch dieselbe vorbestimmte Richtlinie, die eine Steuerung des Verhaltens des föderierten Systems gemäß einem vorbestimmten Satz von Steuerparametern priorisiert, ersetzt wird.

7. Verfahren nach Anspruch 6, wobei eine externe Kommunikation zum und vom System während des Ersatzes der Sätze von Verwaltungssteuerrichtlinien eingeschränkt ist.

8. Verfahren nach Anspruch 6 oder Anspruch 7, bei dem das priorisierte Verhalten durch eine Benutzereingabe, die ein Zugangssteuersystem aufweist, programmiert wird.

9. Verfahren nach Anspruch 6, Anspruch 7 oder Anspruch 8, bei dem ein oder mehrere der speziellen Ereignisse ein manueller Eingriff in einen Teil des föderierten Systems ist, wobei die Steuerparameter eine Abschaltung von Sensoren und/oder Betriebsausrüstungeb, deren Verhalten während der Periode des manuellen Eingriffs unnormal wäre, beinhalten.

10. Verfahren nach Anspruch 6, Anspruch 7 oder Anspruch 8, bei dem ein oder mehrere der speziellen Ereignisse in Reaktion auf eine Fehlfunktion bei einem oder mehrerem Sensoren oder Betriebsausrüstungen erfolgt, wobei die Steuerparameter eine Abschaltung von Sensoren und/oder Betriebsausrüstungen, deren Verhalten als Folge einer derartigen Fehlfunktion unnormal wäre, beinhalten.

11. Verfahren nach Anspruch 9 oder Anspruch 10, bei dem Funktionen, die dazu ausgelegt sind, durch einen Sensor ausgelöst zu werden, in einer Standardeinstellung betrieben werden, wenn der Sensor abgeschaltet ist.

12. Verfahren nach Anspruch 9, Anspruch 10 oder Anspruch 11, bei dem Funktionen, die dazu ausgelegt sind, in einem Modus betrieben zu werden, der von einer Eigenschaft eines Sensors oder einer Betriebsausrüstung des Systems abhängig ist, eine Standardeinstellung zur Verwendung aufweisen, wenn der Sensor oder die Betriebsausrüstung abgeschaltet ist.

13. Verfahren nach Anspruch 9, Anspruch 10, Anspruch 11 oder Anspruch 12, wobei im Normalbetrieb eine oder mehrere Betriebsausrüstungen durch eine Auslösefunktion gesteuert werden und bei dem der Betrieb der Betriebsausrüstungen modifiziert wird, wenn eine oder mehrere der Betriebsausrüstungen abgeschaltet sind.

14. Computersystem, das einen Prozessor und einen Speicher, auf dem Computerprogrammcode gespeichert ist, zum Durchführen der Schritte eines Verfahrens wie in einem der Ansprüche 6 bis 13 beansprucht beinhaltet.

15. Computerprogrammelement, das Computerprogrammcode umfasst, der, wenn er in ein Computersystem geladen und darin ausgeführt wird, bewirkt, dass das Computersystem die Schritte eines Verfahrens wie in einem der Ansprüche 6 bis 13 beansprucht durchführt.

## Revendications

1. Appareil (9) pour commander un système fédéré de capteurs (1, 6) et d'équipements opérationnels (7) en interaction, les capteurs et les équipements opérationnels étant sous le contrôle d'une fédération de systèmes de commande, chaque système de commande étant configurable pour commander les équipements opérationnels en réponse à des événements déclencheurs détectés par les capteurs, selon un ensemble respectif de politiques de commande de gestion configurables, l'appareil étant programmé pour fonctionner, en réponse à un ou plusieurs événements spéciaux identifiés parmi lesdits événements déclencheurs, pour remplacer l'ensemble respectif de politiques de commande de gestion configurables dans chaque système de commande de la fédération par la même politique prédéterminée donnant la priorité à la commande du comportement du système fédéré selon un ensemble prédéterminé de paramètres de commande.

2. Appareil selon la revendication 1, configuré pour restreindre la communication externe vers et depuis le système pendant le remplacement des ensembles de politiques de commande de gestion.

3. Appareil selon la revendication 1 ou la revendication 2, configuré pour permettre que le comportement priorisé soit programmé par une entrée utilisateur ayant un système de contrôle d'accès.

4. Appareil selon la revendication 1, la revendication 2 ou la revendication 3, ayant une disposition pour une intervention manuelle sur une partie du système fédéré, les paramètres de commande incluant l'arrêt de capteurs et/ou des équipements opérationnels dont le comportement serait anormal pendant la période d'une telle intervention manuelle.

5. Appareil selon la revendication 1, la revendication 2 ou la revendication 3, ayant des moyens de détection sensibles à un dysfonctionnement dans un ou plusieurs capteurs ou actionneurs, pour déclencher l'arrêt automatique d'autres capteurs et/ou actionneurs dont le comportement serait anormal en raison d'un tel dysfonctionnement.

6. Procédé de commande d'un système fédéré de capteurs et d'équipements opérationnels en interaction, les capteurs et les équipements opérationnels étant sous le contrôle d'une fédération de systèmes de commande, chaque système de commande étant configurable pour commander les équipements opérationnels en réponse à des événements déclencheurs détectés par les capteurs, selon un ensemble respectif de politiques de commande de gestion configurables,
où, en réponse à un ou plusieurs événements spéciaux identifiés parmi lesdits événements déclencheurs, l'ensemble respectif de politiques de commande de gestion configurables dans chaque système de commande de la fédération est remplacé par la même politique prédéterminée donnant la priorité à la commande du comportement du système fédéré selon un ensemble prédéterminé de paramètres de commande.

7. Procédé selon la revendication 6, dans lequel la communication externe vers et depuis le système est limitée pendant le remplacement des ensembles de politiques de commande de gestion.

8. Procédé selon la revendication 6 ou la revendication 7, dans lequel le comportement priorisé est programmé par une entrée utilisateur ayant un système de contrôle d'accès.

9. Procédé selon la revendication 6, la revendication 7 ou la revendication 8, dans lequel un ou plusieurs des événements spéciaux est une intervention manuelle sur une partie du système, les paramètres de commande incluant l'arrêt de capteurs et/ou des équipements opérationnels dont le comportement serait anormal pendant la période d'une telle intervention manuelle.

10. Procédé selon la revendication 6, la revendication 7 ou la revendication 8, dans lequel un ou plusieurs des événements spéciaux sont sensibles à un dysfonctionnement d'un ou plusieurs capteurs ou d'équipements opérationnels, les paramètres de commande incluant l'arrêt de capteurs et/ou des équipements opérationnels dont le comportement serait anormal du fait d'un tel dysfonctionnement.

11. Procédé selon la revendication 9 ou la revendication 10, dans lequel les fonctions configurées pour être déclenchées par un capteur sont exploitées dans un réglage par défaut si le capteur est arrêté.

12. Procédé selon la revendication 9, la revendication 10 ou la revendication 11, dans lequel des fonctions configurées pour fonctionner dans un mode dépendant d'une propriété d'un capteur ou d'un équipement opérationnel du système ont un réglage par défaut à utiliser si le capteur ou l'équipement opérationnel est arrêté.

13. Procédé selon la revendication 9, la revendication 10, la revendication 11 ou la revendication 12, dans lequel, en fonctionnement normal, un ou plusieurs équipements opérationnels sont commandés par une fonction de déclenchement, et dans lequel le fonctionnement des équipements opérationnels est modifié si un ou plusieurs des équipements opérationnels sont arrêtés.

14. Système informatique comprenant un processeur et une mémoire stockant un code de programme informatique pour exécuter les étapes d'un procédé selon l'une quelconque des revendications 6 à 13.

15. Élément de programme informatique comprenant un code de programme informatique pour, lorsqu'il est chargé dans un système informatique et exécuté sur celui-ci, amener le système informatique à exécuter les étapes d'un procédé tel que revendiqué dans l'une quelconque des revendications 6 à 13.
